# EUROPÄISCHE PATENTSCHRIFT

(11) **EP 1 343 272 B1**
(45) Veröffentlichungstag und Bekanntmachung des Hinweises auf die Patenterteilung: **26.01.2005**
(21) Anmeldenummer: 02360082.8
(22) Anmeldetag: 08.03.2002
(51) Int. Cl.: H04L 12/24

(54) **Verfahren zur Konfiguration von nutzerseitigen Verbindungen zwischen Zugangspunkten eines Übertragungsnetzwerks**
Method for configuration of client side connections between access points of a transmission network
Méthode pour la configuration des connexions du côté client entre les points d'accès d'un réseau de transmission

(43) Veröffentlichungstag der Anmeldung: 10.09.2003
(73) Patentinhaber: ALCATEL, 75008 Paris (FR)
(72) Erfinder: Grammel, Gert, 73066 Uhingen (DE)
(74) Vertreter: Urlichs, Stefan, Dipl.-Phys.

(56) Entgegenhaltungen:
- US-A- 5 774 689
- US-B1- 6 349 098
- GALIS A: "Broadband connectivity management service for multi-domain ATM and SDH networks" GLOBECOM 99, XP010373764
- HOSOON KU ET AL: "Web-based Configuration Management Architecture for Router Networks" ERICSSON INC., XP010376682

## Beschreibung

Die vorliegende Erfindung betrifft ein Verfahren zur Konfiguration mindestens einer nutzerseitigen Verbindung zwischen mit nutzerseitigen Netzwerkeinrichtungen verbindbaren Zugangspunkten eines Übertragungsnetzwerks, insbesondere eines hochverfügbaren Übertragungsnetzwerks. Die Erfindung betrifft ferner einen Server eines Netzwerk Management Systems hierfür, ein Management-Modul für einen Server eines Netzwerk Management Systems hierfür, ein Konfigurationswerkzeug, insbesondere einen Konfigurationsrechner, hierfür sowie ein Konfigurationsmodul für ein Konfigurationswerkzeug hierfür.

In dem Artikel "Web-based Configuration Architecture for Router Networks" von Hosoon Ku et al., Ericsson Inc., XP010376682 wird ein Konfigurations Management System für IP Backbone Router beschrieben. Das System besitzt einen Management Server auf dem mehrere Bediener über mit entsprechenden graphische Benutzerschnittstellen ausgestattete Web-Browser eingeloggt sein können. Der Server kann die Konfiguration der verwalteten Router abfragen und die daraus bestimmte Topologie des Netzes graphisch anzeigen. Die Konfigurationsdaten sind in einer Datenbank des Servers abgelegt. Der Bediener kann die verwalteten IP-Router von seinem Web-Browser aus konfigurieren.

Auf einem von einem Netzbetreiber bereitgestellten Übertragungsnetzwerk kann für einen Nutzer eine einzelne nutzerspezifische, z.B. private, Verbindung oder ein nutzerspezifisches bzw. privates Netzwerk eingerichtet werden. Der Nutzer der Verbindung bzw. des Netzwerkes gibt hierfür dem Netzbetreiber die erforderlichen Konfigurationsdaten an. Der Netzbetreiber richtet sozusagen als "Netzwerkservice" anhand von durch den zukünftigen Nutzer bereitgestellten Daten, bei denen es sich typischerweise um verbal formulierte Anforderungsprofile handelt, die Verbindung bzw. das Netzwerk ein. Hierfür wird z.B. ein Netzwerk Management Systems zur Verwaltung, Steuerung und Überwachung des Übertragungsnetzwerks verwendet. Die Konfigurationsdaten geben z.B. Zugangspunkte des Übertragungsnetzwerkes an, zwischen denen die Verbindung bzw. das Netzwerk eingerichtet werden soll. Die Konfigurationsdaten können auch Angaben über die gewünschte Verfügbarkeit, d.h. Ausfallsicherheit, der Verbindung bzw. des Netzwerkes enthalten.

Um eine gewünschte Verfügbarkeit zu gewährleisten, richtet der Netzbetreiber z.B. sogenannte geschützte (engl. "protected") Verbindungen ein, bei denen zusätzliche Ersatz- oder Schutz-Übertragungskapazität vorhanden ist, die beim Ausfall der normalen Arbeitskapazität einer Verbindung als Ersatz bereitsteht. Das Bereitstellen der Ersatz-Übertragungskapazität ist jedoch aufwändig und verursacht dem Nutzer zusätzliche Kosten.

Zur Erzielung einer vorbestimmten Verfügbarkeit kann auch auf der Basis eines Übertragungsnetzwerks ein nutzerspezifisches bzw. privates Ringnetz aufgebaut werden. Bei einem derartigen privaten Ringnetz ist ein Netzknoten des Übertragungsnetzwerks mit jeweils genau zwei benachbarten Netzknoten verbunden. Die exklusive Zuordnung von Netzknoten zu dem Ringnetz ist jedoch ebenfalls aufwändig und mit zunehmender Anzahl von Verbindungen des Ringnetzes komplizierter zu realisieren. Ferner sind insbesondere im Fehlerfall durch nutzerseitige Netzknoten, z.B. durch IP-Router (IP = Internet Protokoll), anzuwendende Routing-Algorithmen für vermaschte Netzwerke optimiert, nicht jedoch für Ringnetze. Größere Ringnetze neigen zudem zu Instabilität.

Um möglichst zuverlässige Verbindungen zu erhalten, kann der Benutzer Verbindungen derart einrichten oder einrichten lassen, dass sie aus seiner Sicht wahrscheinlich über voneinander unabhängige Netzwerkeinrichtungen und Übertragungsleitungen des Übertragungsnetzwerks führen. Beispielsweise kann der Nutzer jeweils weit voneinander entfernte Zugangspunkte für die Verbindungen auswählen. Allerdings können dennoch zwei oder mehr Verbindungen des nutzerseitigen Netzwerks über gemeinsame Einrichtungen des Übertragungsnetzwerks führen, beispielsweise über einen zentralen Netzknoten. Bei Ausfall der gemeinsamen Einrichtung sind alle über diese führende Verbindungen gestört, so dass die erforderliche Zuverlässigkeit der Verbindungen tatsächlich nicht vorhanden ist.

Es ist daher Aufgabe der Erfindung, die Einrichtung von mindestens einer nutzerseitigen Verbindung, insbesondere eines nutzerseitigen Netzwerks, auf einem Übertragungsnetzwerk zu ermöglichen, wobei insbesondere die Verfügbarkeit des Übertragungsnetzwerks berücksichtigt werden soll.

Zur Lösung der Aufgabe dient ein Verfahren gemäß der technischen Lehre des Anspruchs 1. Zur Lösung der Aufgabe sind ferner vorgesehen: ein Server eines Netzwerk Management Systems, ein Management-Modul für einen Server eines Netzwerk Management Systems, ein Konfigurationswerkzeug, insbesondere ein Konfigurationsrechner, sowie ein Konfigurationsmodul für ein Konfigurationswerkzeug, alle jeweils gemäß der technischen Lehren weiterer unabhängiger Ansprüche.

Der Erfindung liegt dabei der Gedanke zugrunde, dass zur Konfiguration mindestens einer nutzerseitigen Verbindung zwischen Zugangspunkten eines Übertragungsnetzwerks, die mit nutzerseitigen Netzwerkeinrichtungen verbindbar und/oder verbunden sind, zunächst Netzwerkdaten über Netzwerkeinrichtungen des Übertragungsnetzwerks und Verbindungswege zwischen diesen Netzwerkeinrichtungen ermittelt werden, über die die mindestens eine nutzerseitige Verbindung, vorzugsweise ein nutzerseitiges Netzwerk, aufgebaut werden kann. Abstrakter formuliert könnte man auch sagen, dass das Übertragungsnetzwerk ein erstes Netzwerk bildet, auf dem mindestens eine Verbindung eines zweiten Netzwerks, nämlich des nutzerseitigen Netzwerks, einrichtbar ist. Zur Ermittlung der Netzwerkdaten eignet sich beispielsweise ein Netzwerk Management System oder ein sonstiges System, das Netzwerkdaten über Netzwerkeinrichtungen bzw. Verbindungswege des Übertragungsnetzwerks erfassen kann. Bei dem Übertragungsnetzwerk handelt es sich vorzugsweise um ein hochverfügbares Übertragungsnetzwerk, z.B. ein SDH-Netzwerk (SDH = Synchronous Digital Hierarchy) oder ein SONET = Synchronous Optical NETwork). Aus den Netzwerkdaten, sozusagen aus den "Rohdaten", werden dann Planungsdaten erzeugt, die zur Darstellung des Übertragungsnetzwerks geeignet sind. Hierbei können - müssen aber nicht - alle Netzwerkeinrichtungen bzw. Verbindungswege des Übertragungsnetzwerks beispielsweise graphisch und/oder akustisch dargestellt werden. Es genügt, die für die nutzerseitige Verbindung bzw. das nutzerseitige Netzwerk prinzipiell nutzbaren Einrichtungen des Übertragungsnetzwerks darzustellen. Andere, für derartige Verbindungen bzw. Netzwerke nicht verfügbare Einrichtungen können allerdings auch dargestellt werden. Die Planbarkeit der nutzerseitigen Verbindung bzw. des Netzwerks ist dadurch verbessert, dass anhand der Darstellung zumindest ein Verfügbarkeitskriterium der Netzwerkeinrichtungen bzw. der Verbindungswege ermittelbar ist. Beispielsweise ist im Zusammenhang mit den Einrichtungen des Übertragungsnetzwerks zumindest ein Verfügbarkeitskriterium anhand der Planungsdaten graphisch visualisierbar. Die Planungsdaten werden für ein Konfigurationswerkzeug, z.B. einen Konfigurationsrechner, bereitgestellt, d.h. beispielsweise über das Internet übermittelt oder auf einem Datenträger bereitstellt. Das Konfigurationswerkzeug kann anhand der Planungsdaten die insbesondere graphische Darstellung erzeugen. Eine graphische Darstellung dient insbesondere zur "manuellen" Konfiguration der nutzerseitigen Verbindung bzw. des Netzwerks. Prinzipiell könnte ein nutzerseitiges Konfigurationswerkzeug allerdings auch auf der Basis der Planungsdaten, insbesondere auf der Basis des mindestens einen Verfügbarkeitskriteriums, die nutzerseitige Verbindung bzw. das Netzwerk sozusagen auch "automatisch" konfigurieren, z.B. in einer Art Autoroute-Funktion. Bei einem solchen Szenario ist zwar eine graphische Darstellung des Verfügbarkeitskriteriums vorteilhaft, jedoch nicht unbedingt notwendig.

In jedem Fall kann ein Nutzer "seine" Verbindung bzw. "sein" Netzwerk unter Berücksichtigung der Verfügbarkeit der Einrichtungen des Übertragungsnetzwerks selbst planen und konfigurieren. Der Nutzer kann zwar eine durch den Netzbetreiber des Übertragungsnetzwerks garantierte Ausfallsicherheit einkaufen, beispielsweise in Form sogenannter geschützter Verbindungen ("protected connections"). Allerdings kann der Nutzer auf der Basis der ihm durch die Planungsdaten bekannten Verfügbarkeit seine privaten, nutzerseitigen Verbindungen unter eigener Regie so planen, dass eine erforderliche Ausfallsicherheit vorhanden ist. Der Nutzer kann zur Verbesserung der Ausfallsicherheit beispielsweise auch eigene, von dem Übertragungsnetzwerk unabhängige Netzwerkeinrichtungen, Verbindungswege oder dergleichen in die Planung seines nutzerseitigen Netzwerks einbeziehen.

Weitere vorteilhafte Ausgestaltungen und Wirkungen der Erfindung ergeben sich aus den abhängigen Ansprüchen und der Beschreibung.

Zweckmäßigerweise betrifft das mindestens eine Verfügbarkeitskriterium zumindest teilweise die Topologie des Übertragungsnetzwerks. Dabei wird beispielsweise die absolute räumliche Position der Einrichtungen des Übertragungsnetzwerks, also der Netzwerkeinrichtungen und/oder der Verbindungswege, durch das Verfügbarkeitskriterium wiedergegeben. Vorzugsweise jedoch repräsentiert das Verfügbarkeitskriterium die jeweilige relative räumliche Position der Einrichtungen zueinander. Beispielsweise werden räumlich nahe beieinander angeordnete, insbesondere gleichartige, Einrichtungen, z.B. Netzwerkeinrichtungen oder Verbindungswege, als jeweils eine logische Einrichtung dargestellt, z.B. als jeweils eine logische Netzwerkeinrichtung bzw. als jeweils ein logischer Verbindungsweg, den man z.B. auch als "topolgical link" bezeichnen könnte. Verbindungswege, die auf zumindest abschnittsweise auf einer gemeinsamen Trasse verlaufenden Verbindungsleitungen vorgesehen sind, werden vorteilhafterweise als ein logischer Verbindungsweg dargestellt. Gleiches ist auch bei Verbindungswegen vorteilhaft der Fall, die auf einer gemeinsamen Verbindungsleitung verlaufen. Solche Verbindungswege sind z.B. separaten Übertragungskanälen der Verbindungsleitung zugeordnet. Ein Ringnetz innerhalb des Übertragungsnetzwerks oder ein sonstiges Teilnetz des Übertragungsnetzwerks wird zweckmäßigerweise durch eine einzige logische Netzwerkeinrichtung repräsentiert, bei der es sich z.B. um einen logischen Knoten handeln kann.

Das mindestens eine Verfügbarkeitskriterium kann beispielsweise auch die jeweilige absolute, von Netzbetreiber garantierte Ausfallsicherheit einer Einrichtung des Übertragungsnetzwerks betreffen.

Anhand der Planungsdaten sowie gegebenenfalls zusätzlicher Bedienereingaben kann das Konfigurationswerkzeug Konfigurationsdaten zur Einrichtung der mindestens einen Verbindung bzw. des Netzwerks auf dem Übertragungsnetzwerk erzeugen. Zweckmäßigerweise erzeugt das Konfigurationswerkzeug die Konfigurationsdaten für die mindestens eine Verbindung unter Berücksichtigung mindestens eines die für die mindestens eine Verbindung erforderlichen Einrichtungen des Übertragungsnetzwerks betreffenden Konfigurationskriteriums, z.B. der jeweiligen Verfügbarkeit. Ein solches Konfigurationskriterium kann das Konfigurationswerkzeug auch zur Überprüfung einer Bedienereingabe verwenden, die zur Einrichtung einer nutzerseitigen Verbindung dient. Das Konfigurationswerkzeug kann auch sonstige Plausibilitätskontrollen bei Bedienereingaben durchführen.

Jedenfalls übermittelt das Konfigurationswerkzeug zweckmäßigerweise die erzeugten Konfigurationsdaten, z.B. über das Internet oder auf einem Datenträger, an das Netzwerk Management System zur Einrichtung der mindestens einen nutzerseitigen Verbindung. Vorteilhafterweise übermittelt das Konfigurationswerkzeug die Konfigurationsdaten in einem für das Netzwerk Management System auslesbaren, z.B. normierten, Datenformat. Es versteht sich, dass auch das Netzwerk Management System die Konfigurationsdaten auf Plausibilität anhand eines Überprüfungskriteriums überprüfen kann.

Das Konfigurationswerkzeug und/oder das Netzwerk Management System können für die mindestens eine nutzerseitige Verbindung bzw. das nutzerseitige Netzwerk die Gesamt-Verfügbarkeit, insbesondere auf Basis der Planungsdaten, ermitteln. Bei einer solchen Ermittlung werden beispielsweise die jeweiligen individuellen Verfügbarkeiten der an der Verbindung bzw. dem Netzwerk beteiligten Einrichtungen des Übertragungsnetzwerks, die Struktur der nutzerseitigen Verbindung bzw. des Netzwerks oder dergleichen berücksichtigt. Es versteht sich, dass das Konfigurationswerkzeug und/oder das Netzwerk Management System auf der Basis der ermittelten Gesamt-Verfügbarkeit auch Optimierungsvorschläge zur Verfügborkeitsoptimierung der nutzerseitigen Verbindung bzw. des Netzwerks ermitteln können.

Das Netzwerk Management System setzt zwar vorzugsweise die Konfigurationsdaten derart in eine nutzerseitige Verbindung bzw. in ein nutzerseitiges Netzwerk um, dass die topologischen Anforderungen des Nutzers möglichst exakt in der vorgegebenen Weise realisiert werden. Beispielsweise sollen gemäß der Konfigurationsdaten zwei nutzerseitige Verbindungen über zwei hinsichtlich ihrer Verfügbarkeit voneinander separate Verbindungswege des Übertragungsnetzwerks führen. Das Netzwerk Management System richtet dementsprechend die nutzerseitigen Verbindungen auf zwei tatsächlich z.B. räumlich voneinander entfernten Verbindungswegen ein.

Es ist aber auch möglich, dass das Netzwerk Management System automatisch oder auf eine entsprechende Bedienereingabe hin die nutzerseitigen Anforderungen äquivalent umsetzt. Die Konfigurationsdaten geben beispielsweise vor, dass zwei nutzerseitige Verbindungen über räumlich getrennte Netzknoten des Übertragungsnetzwerks mit jeweils mittlerer Verfügbarkeit führen. Das Netzwerk Management System implementiert die beiden Verbindungen tatsächlich jedoch über einen einzigen Netzknoten des Übertragungsnetzwerks, der jedoch eine hohe Verfügbarkeit aufweist. Das Netzwerk Management System kann diese äquivalente Lösung dem Konfigurationswerkzeug mitteilen oder nicht.

Im Folgenden wird die Erfindung anhand von Ausführungsbeispielen unter Zuhilfenahme der Figuren dargestellt.
- Figur 1: zeigt eine Anordnung zur Ausführung der Erfindung mit einem teilweise dargestellten Übertragungsnetzwerk TN, das durch ein erfindungsgemäßes Netzwerk Management System NMS gesteuert und überwacht wird; das Netzwerk Management System NMS kooperiert mit einem erfindungsgemäßen Konfigurationswerkzeug KC in erfindungsgemäßer Weise.
- Figur 2: ein gewünschtes Konzept eines nutzerseitigen, privaten Netzwerks PN, das auf dem Übertragungsnetzwerk TN eingerichtet werden soll.
- Figur 3: eine detailliertere Ansicht des Übertragungsnetzwerks TN gemäß Figur 1, wobei Verbindungswege 1-17 des Übertragungsnetzwerks TN sowie Verbindungen zwischen dem Übertragungsnetzwerk TN und nutzerseitigen Netzwerkeinrichtungen U1 - U5 eines nutzerseitigen Netzwerks PN gezeigt sind, das auf dem Übertragungsnetzwerk TN eingerichtet ist.
- Figur 4: eine durch das Konfigurationswerkzeug KC erzeugte graphische Darstellung TNI des Übertragungsnetzwerks TN mit einer schematischen Darstellung SPN des Netzwerks PN.
- Figur 5A, 5B: etwa die Darstellung TNI gemäß Figur 4, allerdings mit einem jeweils in seiner Konfiguration modifizierten Netzwerk PN.
- Figur 6: eine schematische Darstellung eines erfindungsgemäßen Management-Moduls MM des Netzwerk Management Systems NMS gemäß Figur 1.
- Figur 7: eine schematische Darstellung eines erfindungsgemäßen Konfigurationsmoduls KM des Konfigurationswerkzeugs KC gemäß Figur 1.
- Figur 8: einen durch das Management System NMS gemäß Figur 1 erzeugten Planungsdatensatz PDSK3.

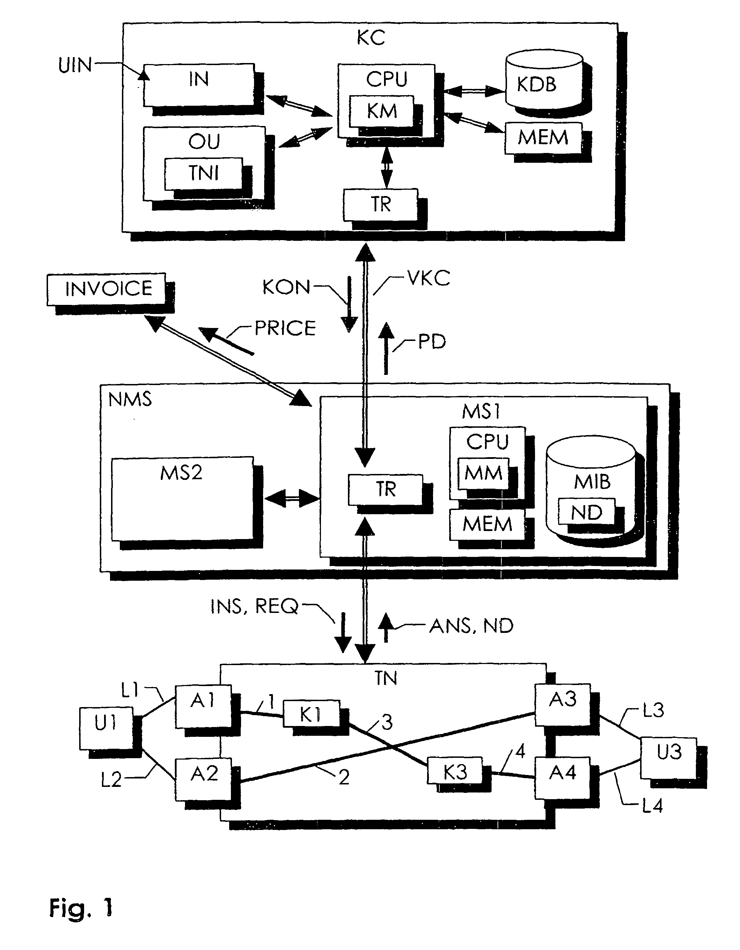

In Figur 1 ist eine beispielhafte Anordnung dargestellt, mit der die Erfindung ausgeführt werden kann. Ein Übertragungsnetzwerk TN wird durch ein Netzwerk Management System NMS, im Folgenden kurz als Management System NMS bezeichnet, gesteuert und überwacht. Das Übertragungsnetzwerk TN ist vorliegend ein geschaltetes Telekommunikationsnetz, z.B. ein SDH Netzwerk oder ein Telefonnetz, beispielsweise ein ISDN-Telefonnetzwerk (ISDN = Integrated Services Digital Network). Prinzipiell könnte das Übertragungsnetzwerk TN auch ein geroutetes Netzwerk sein. Jedenfalls sind bei dem Übertragungsnetzwerk TN Verbindungswege 1-17 vorgesehen, auf denen nutzerseitige Verbindungen zwischen Zugangspunkten A1-A13 eingerichtet werden können. Bei den Verbindungswegen 1-17 handelt es sich z.B. um elektrische und/oder optische Verbindungsleitungen, auf denen eine oder mehrere Verbindungen einrichtbar sind. Die nutzerseitigen Verbindungen sind z.B. sogenannte gemietete Leitungen ("Leased lines") oder dergleichen.

Bei den Zugangspunkten A1-A13 handelt es sich beispielsweise um Netzwerkeinrichtungen zur Verbindung des Übertragungsnetzwerks TN mit nutzerseitigen Netzwerkeinrichtungen U1-U5, also z.B. um Multiplexer/Demultiplexer oder dergleichen. An den Zugangspunkten A1-A13 können die nutzerseitigen, privaten Netzwerkeinrichtungen U1-U5 Datenverkehr in das Übertragungsnetzwerk TN einspeisen. Ferner übermittelt das Übertragungsnetzwerk TN an den Zugangspunkten A1-A13 Datenverkehr an die Netzwerkeinrichtungen U1-U5. Die Verbindungswege 1-17 führen über Netzwerkeinrichtungen, z.B. über Netzknoten K1-K7, z.B. Cross-Connects oder Vermittlungsstellen, sowie über einen Multiplexer/Demultiplexer MUX. Das Übertragungsnetzwerk TN kann auch weitere, im Wesentlichen nicht dargestellte Netzwerkeinrichtungen enthalten, z.B. einen Netzknoten KN.

Das Management System NMS ermittelt Netzwerkdaten ND über die Netzwerkeinrichtungen K1-K7, MUX des Übertragungsnetzwerks TN und über Verbindungswege 1-17 zwischen diesen Netzwerkeinrichtungen. Ferner kann das Management System NMS im Ausführungsbeispiel das Übertragungsnetzwerk TN verwalten. Es kann beispielsweise nutzerseitige Verbindungen auf dem Übertragungsnetzwerk TN konfigurieren, d.h. z.B. einrichten, abbauen und Parameter der Verbindungen, z.B. die jeweilige Übertragungskapazität, modifizieren. Das Management System NMS kann vorliegend das Übertragungsnetzwerk TN auch Überwachen und Steuern, z.B. Alarmmeldungen von den Netzwerkeinrichtungen A1-A13, K1-K7, MUX empfangen bzw. Steuerbefehle zur Behebung eines Störungszustandes an diese senden.

Das Management System NMS weist vorliegend Server MS1, MS2 auf, die durch lediglich mit Pfeilen angedeutete Verbindungsleitungen untereinander sowie mit dem Übertragungsnetzwerk TN und mit einem Konfigurationswerkzeug KC verbunden sind. Das Management System NMS könnte auch nur den Server MS1 oder weitere, nicht dargestellte Server enthalten. Der Server MS 1 enthält eine Datenbank MIB, in der die Netzwerkdaten ND gespeichert sind. Die Netzwerkdaten ND enthalten sozusagen Beschreibungen der im Übertragungsnetzwerk TN angeschlossenen, durch das Management System NMS verwaltbaren Objekte und Funktionen, z.B. der Netzknoten K1-K7 und der Zugangspunkte A1-A13. Bei der Datenbank MIB handelt es sich z.B. um eine sogenannte Management Information Base.

Anhand der Netzwerkdaten ND erzeugt das Management System NMS Planungsdaten PD zu einer Darstellung TNI des Übertragungsnetzwerks TN, anhand derer zumindest ein Verfügbarkeitskriterium der Netzwerkeinrichtungen K1 -K7, MUX und/oder der Verbindungswege 1-17 ermittelbar ist. Das Management System NMS stellt die Planungsdaten PD für das Konfigurationswerkzeug KC bereit, welches dann anhand der Planungsdaten PD die Darstellung TNI zur Konfiguration einer nutzerseitigen Verbindung auf dem Übertragungsnetzwerk TN erzeugt. Das Management System NMS übermittelt die Planungsdaten PD über eine als Pfeil schematisch dargestellte Verbindung VKC, die z.B. über das Internet oder ein sonstiges Breitbandnetzwerk führt. Prinzipiell könnten die Planungsdaten PD auch mittels Disketten oder sonstiger Datenträger übermittelt werden.

Die Verbindung VKC wird z.B. durch das Konfigurationswerkzeug KC hergestellt. Das Konfigurationswerkzeug KC loggt sich vorzugsweise bei dem Server MS1 ein, beispielsweise unter Angabe eines Passwortes oder dergleichen. Das Konfigurationswerkzeug KC fragt die Planungsdaten PD z.B. bei dem Server MS1 ab.

Das Konfigurationswerkzeug KC ist im Ausführungsbeispiel ein Konfigurationsrechner. Das Konfigurationswerkzeug KC und der Server MS1 weisen im Ausführungsbeispiel einen prinzipiell ähnlichen Aufbau auf, der lediglich schematisch dargestellt und erläutert ist. Die Rechner KC, MS1 sind beispielsweise für eine Kommunikation über das Internet oder ein sonstiges Breitbandnetzwerk ausgerüstete Personalcomputer oder dergleichen. Die Rechner KC, MS1 weisen Verbindungsmittel TR auf, bei denen es sich beispielsweise um Ethernet-Schnittstellenkarten, Modems, ISDN-Adapter oder einen sonstigen Schnittstellenadapter zur Telekommunikation handelt. Die Verbindungsmittel TR können auch ein Datenträgerlaufwerk, z.B. ein Diskettenlaufwerk, enthalten, das Daten auf einen Datenträger schreiben oder von diesem auslesen kann. Das Konfigurationswerkzeug KC kann mit seinen Verbindungsmitteln TR die Planungsdaten PD von dem Management System NMS empfangen und Konfigurationsdaten KON an dieses senden. Der Server MS kann mit seinen Verbindungsmitteln TR die Konfigurationsdaten KON empfangen und die Planungsdaten PD an das Konfigurationswerkzeug KC senden. Ferner kommuniziert der Server MS1 über die Verbindungsmittel TR mit dem Übertragungsnetzwerk TN. Weiterhin weisen die Rechner KC, MS1 Steuermittel CPU sowie Speichermittel MEM auf. Das Steuermittel CPU ist beispielsweise ein Prozessor, mit dem Programm-Code ausgeführt werden kann, der in den Speichermitteln MEM gespeichert ist. Das Steuermittel CPU des Servers MS1 führt beispielsweise den Programm-Code eines erfindungsgemäßen Management-Moduls MM aus, das Steuermittel CPU des Konfigurationswerkzeugs KC den Programm-Code eines erfindungsgemäßen Konfigurationsmoduls KM. Bei den Speichermitteln MEM handelt es sich beispielsweise um Festplatten, RAM-Bausteine (RAM = Random Access Memory) oder sogenannte Flash-ROM-Module (ROM = Read Only Memory). Lediglich beim Konfigurationsrechner KC sind Ausgabemittel OU sowie Eingabemittel IN gezeigt. Auch der Server MS1 kann derartige Mittel OU, IN aufweisen. Die Ausgabemittel OU enthalten beispielsweise einen oder mehrere Computermonitore, die Eingabemittel KEYA eine Tastatur und/oder eine Computer-Maus. Weitere Komponenten der Rechner KC, MS1, beispielsweise interne Verbindungen sowie Mikrofone, Lautsprecher oder dergleichen, sind aus Gründen der Übersichtlichkeit nicht dargestellt. Die Rechner KC, MS1 werden durch ein Betriebssystem, z.B. UNIX, betrieben.

Das Management System NMS und die Netzwerkeinrichtungen A1-A13, K1-K7, MUX kommunizieren beispielsweise über das Simple Network Management Protocol (SNMP), das auf dem Transmission Control Protocol over Internet Protocol (TCP/IP) basiert, oder über das Common Management Information Protocol (CMIP) gemäß den OSI-Definitionen (OSI = Open Systems Interconnect). Das Management System NMS enthält hierfür beispielsweise sogenannte SNMP-Manager die sogenannten SNMP-Agents mit der Netzwerkeinrichtungen A1-A13, K1-K7, MUX kommunizieren. Beispielsweise führt das Management-Modul MM die Funktionen eines SNMP-Managers aus.

Sinngemäß kann auch die Kommunikation zwischen dem Konfigurationswerkzeug KC und dem Server MS1 ausgestaltet sein: beispielsweise kann das Konfigurationsmodul KM als SNMP-Manager agieren, der bei dem Management-Modul MM die Planungsdaten PD abfragt. In dieser Kommunikationsbeziehung zwischen Konfigurationswerkzeug KC und Management System NMS arbeitet das Management-Modul MM als SNMP-Agent.

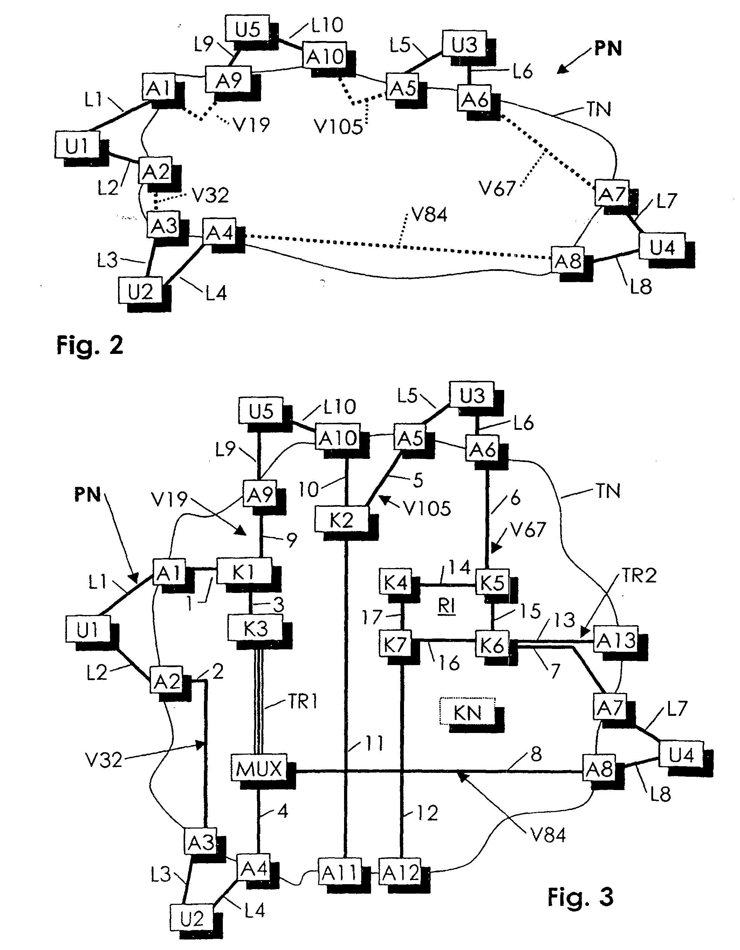

Auf dem Übertragungsnetzwerk TN soll ein eines nutzerseitiges, privates Netzwerks PN in Form eines Ringnetzes eingerichtet werden. Die gewünschte Konfiguration des Netzwerks PN ist in Figur 2 dargestellt: die Netzwerkeinrichtungen U1, U2, U3, U4 und U5 sind über Verbindungen L1, L2; L3, L4; L5, L6; L7, L8; L9 und L10 mit den Zugangspunkten A1 A2; A3, A4; A5, A6; A7, A8; A9. A 10 verbunden. Zwischen den Zugangspunkten A1 und A9, A10 und A5, A6 und A7, A8 und A4, A3 und A2 sollen Verbindungen V19, V105, V67, V84 und V32 eingerichtet werden, die aus Gründen der Ausfallsicherheit über jeweils voneinander unabhängige Verbindungswege des Übertragungsnetzwerks TN führen sollen. Ausgehend von der schematischen Darstellung gemäß Figur 2 könnte man annehmen, dass die Verbindungen V19, V105, V67, V84 und V32 verhältnismäßig weit voneinander entfernt sind und dementsprechend über jeweils voneinander unabhängige Verbindungswege des Übertragungsnetzwerks TN führen. Tatsächlich kann dies aber nicht der Fall sein, was anhand Figur 3 erläutert wird.

Die Verbindungen V 19 und V84 führen über die Netzknoten K1 und K3. Diese sind zwar separate Netzknoten, jedoch in unmittelbarer räumlicher Nähe zueinander, z.B. im selben Gebäude, angeordnet. Es besteht daher eine verhältnismäßig große Wahrscheinlichkeit, dass bei einer Störung oder einem Ausfall des einen Netzknotens K1 oder K3 der jeweils andere Netzknoten K3 bzw. K 1 ebenfalls gestört bzw. ausgefallen ist. Beispielsweise betrifft ein Versorgungsspannungsabfall oder ein Brand in dem Gebäude der Netzknoten K1 und K3 zu einem Ausfall beider Netzknoten K1 und K3. Es ist also ein sogenannter "single point of failure" vorhanden. Wenn dort ein Fehler auftritt, ist das einzurichtende Netzwerk PN insgesamt gestört, da die Ringstruktur an zwei Ringverbindungen gleichzeitig unterbrochen ist.

Eine Lösung des Problems wäre, dass der Netzbetreiber des Übertragungsnetzwerks TN die Verbindungen V19, V105, V67, V84 und V32 durch eine geeignete andere Anordnung, durch das Vorsehen ausfallsicherer Verbindungswege oder dergleichen ausfallsicherer gestaltet. Der Nutzer des Netzwerks PN müsste für diese Maßnahmen jedoch bezahlen; die Ausnutzung des Übertragungsnetzwerks TN wäre unter Umständen bei den genannten netzbetreiberseitigen Maßnahmen nicht optimal. Die Planung des Netzwerks PN wird erfindungsgemäß daher zum Nutzer des Netzwerks PN verlagert, wofür das Management System NMS und das Konfigurationswerkzeug KC in erfindungsgemäßer Weise kooperieren:

Zunächst ermittelt das Management-Modul MM mit Hilfe einer Funktion DET die Netzwerkdaten ND des Übertragungsnetzwerks TN. Dabei sendet der Server MS1 beispielsweise Abfragenachrichten REQ an die Netzwerkeinrichtungen A1-A13, K1-K7, MUX. Diese übermitteln darauf Antwortnachrichten ANS mit den Netzwerkdaten ND oder Teilen davon. Es ist auch möglich, dass die Funktion DET die Datenbank MIB nach den Netzwerkdaten ND oder Teilen davon abfragt und/oder Daten aus den Antwortnachrichten ANS in die Datenbank MIB einträgt.

Die Netzwerkdaten ND enthalten insbesondere Informationen über die Struktur des Übertragungsnetzwerks TN, beispielsweise dass der Zugangspunkt A1 über einen Verbindungsweg 1 mit dem Netzknoten K1 und dieser über einen Verbindungsweg 9 mit dem Zugangspunkt A9 verbunden ist, dass die Netzknoten K1 und K3 über einen Verbindungsweg 3 und die Zugangspunkte A2 und A3 über einen Verbindungsweg 2 miteinander verbunden sind und so weiter. Auch weitere Informationen können in den Netzwerkdaten ND enthalten sein. Beispielsweise können die Netzknoten K1-K7 ihre jeweilige individuelle Verfügbarkeit und/oder ihre mittlere Auslastung oder dergleichen an das Management System NMS melden. Andere Bestandteile der Netzwerkdaten ND sind vorzugsweise in der Datenbank MIB gespeichert, z.B. Kosteninformationen über Kosten bei der Nutzung der Netzknoten K1-K7, Regresszahlungsinformotionen über die Höhe von Regresszahlungen im Fehlerfall eines Netzknotens K1-K7, Informationen über die Topologie des Übertragungsnetzwerks TN oder dergleichen. Beispielsweise ist in der Datenbank MIB als Verfügbarkeitskriterium gespeichert, dass die Netzknoten K1 und K3 sich in unmittelbarer räumlicher Nähe zueinander befinden.

Anhand der Netzwerkdaten ND erzeugt eine Funktion GEN des Management-Moduls MM die Planungsdaten PD. Eine Funktion PROV mit einer Senderoutine SN, die z.B. die Verbindungsmittel TR ansteuert, übermittelt die Planungsdaten PD an das Konfigurationswerkzeug KC, welches die Planungsdaten PD beim Ausführungsbeispiel mit dem Konfigurationsmodul KM weiterverarbeitet. Das Konfigurationsmodul KM erzeugt mit einer Funktion UIG anhand der Planungsdaten PD die graphische Darstellung TNI des Übertragungsnetzwerks TN und gibt diese an den Ausgabemitteln OU aus. Die Darstellung TNI ist beispielsweise eine sogenannte graphische Bedienoberfläche oder bildet einen Bestandteil einer graphischen Bedienoberfläche. Sie wird beispielsweise in einem Fenster einer Bedienoberfläche angezeigt.

Anhand der Darstellung TNI sind Verfügbarkeitskriterien der Netzwerkeinrichtungen A1-A13, K1-K7, MUX sowie der Verbindungswege 1-17 des Übertragungsnetzwerks TN ermittelbar. Die Darstellung TNI zeigt zumindest teilweise die Topologie des Übertragungsnetzwerks TN. Dabei ist sind die räumlichen Positionen der Netzwerkeinrichtungen A1-A13, K1-K7, MUX und der Verbindungswege 1-17 des Übertragungsnetzwerks relativ zueinander erkennbar. Beispielsweise sind die Zugangspunkte A1-A13 durch von Symbole SA1-SA 13 dargestellt. Die jeweilige Position der Symbole oder Icons SA1, SA9, SA10, SA5, SA6, SA13, SA7, SA8, SA12, SA11, SA4, SA3, SA2 (im Uhrzeigersinn) an einer äußeren Begrenzungslinie STN des Übertragungsnetzwerks TN entspricht z.B. der relativen Position der Zugangspunkte A1-A13 zueinander. Beispielsweise sind die Symbole SA6 und SA13 sowie SA8 und SA12 jeweils relativ weit voneinander angeordnet, wohingegen die Symbole SA12, SA11, SA4, SA3 verhältnismäßig nahe beieinander liegen. In den Planungsdaten PD sind hierfür beispielsweise geographische Daten der Zugangspunkte A1-A13, z.B. als GPS-Daten (GPS = Global Positioning System), angegeben. Es können auch die Abstände der Zugangspunkte A1-A13 und/oder der Symbole SA1-SA13 zueinander angegeben sein.

Weitere topologische Merkmale des Übertragungsnetzwerks TN beeinflussen die Verfügbarkeit von auf diesem einzurichtenden und/oder eingerichteten nutzerseitige Verbindungen. Diese topologischen Merkmale sind dementsprechend als Verfügbarkeitskriterien in den Planungsdaten PD enthalten und werden in der Darstellung TNI graphisch verdeutlicht.

Beispielsweise sind die räumlich nahe beieinander angeordneten Netzknoten K1 und K3 zu einer logische Netzwerkeinrichtung SK1 zusammengefasst, die als ein einziges Symbol angezeigt wird. Zum logischen Netzwerkeinrichtung SK1 führen die durch Symbole S1, S9, S4, S8 dargestellten Verbindungswege 1, 9, 4, 8 von den Zugangspunkt-Symbolen SA1, SA9, SA4, SA8. Jedenfalls ist an der Darstellung TNI erkennbar, dass die nutzerseitigen Verbindungen V84 und V19 über die logische Netzwerkeinrichtung SK1 führen, die nutzerseitig an sich gewünschte Ausfallsicherheit (siehe Figur 2) des Netzwerks PN daher nicht vorhanden ist.

Auch ein im Übertragungsnetzwerk TN enthaltenes Ringnetz Rl ist in den Planungsdaten PD als einzige logische Netzwerkeinrichtung SK3 angegeben, die durch ein einziges Symbol graphisch dargestellt wird. Das Ringnetz Rl enthält die Netzknoten K4 - K7, die durch Verbindungswege 14 - 17 (Nennung jeweils im Uhrzeigersinn) miteinander verbunden sind. In der Realität (siehe Figur 3) ist der Netzknoten K7 über einen Verbindungsweg 12 mit dem Zugangspunkt A12, der Netzknoten K5 über einen Verbindungsweg 6 mit dem Zugangspunkt A6 und der Netzknoten K6 über Verbindungswege 13, 7 mit den Zugangspunkten A13, A7 verbunden. Gemäß der Angaben in den Planungsdaten PD zeigt die Darstellung TNI das Ringnetz Rl als logische Netzwerkeinrichtung SK3, die über symbolische Verbindungswege S6, S13, S7 und S12 mit den Symbolen SA6, SA13, SA7 und SA12 der Zugangspunkte A6, A13, A7 und A12 verbunden ist.

Es versteht sich, dass - anders als in den Figuren - auch räumlich nahe beieinander angeordnete Zugangspunkte in der Darstellung TNI als jeweils ein logischer Zugangspunkt dargestellt sein könnten.

Räumlich nahe beieinander angeordnete Verbindungswege sind in den Planungsdaten PD als jeweils ein logischer Verbindungsweg angegeben und in der Darstellung TNI durch entsprechende Symbole dargestellt.

Beispielsweise steht ein röhrenartiger logischer Verbindungsweg STR1 für eine Verbindungsleitung TR1 zwischen dem Netzknoten K3 und dem Multiplexer MUX. Die Verbindungswege 4 und 8 verlaufen auf jeweils separaten Übertragungskanälen der Verbindungsleitung TR1. Bei einem Ausfall oder einer Störung der Verbindungsleitung TR1 sind beide Verbindungswege 4 und 8 betroffen. Dies ist anhand des logischen Verbindungswegs STR1 in der Darstellung TNI erkennbar. Auch der Multiplexer MUX wird durch den logischen Verbindungsweg STR1 repräsentiert.

Die Verbindungswege 7 und 13 verlaufen abschnittsweise auf einer gemeinsamen Trasse TR2. Diese ist durch einen röhrenartigen logischen Verbindungsweg STR2 repräsentiert.

Soweit die räumlich Anordnung der Netzwerkeinrichtungen und Verbindungswege des Übertragungsnetzwerks TN die jeweilige Verfügbarkeit nicht beeinflusst sind diese jeweils durch separate Symbole, Linien, lcons oder dergleichen dargestellt. Die Symbole SA2 und SA3 der Zugangspunkte A2 und A3 sind z.B. durch ein linienartiges Symbol S2 des Verbindungswegs 2 miteinander verbunden. Der Netzknoten K2 ist als Symbol SK2 gezeigt, das über Linien S5, S10, S11, die für die Verbindungswege 5, 10, 11 stehen, mit den Zugangspunkt-Symbolen A5, A10, A11 verbunden ist.

Die Darstellung TNI könnte zwar prinzipiell nur das Übertrogungsnetzwerk TN zeigen. Beim Ausführungsbeispiel jedoch sind zusätzlich auch Symbole SU1-SU5 für die nutzerseitigen Netzwerkeinrichtungen U1-U5 und Symbole SL1 - SL10 für deren Verbindungen L1 - L10 mit den Zugangspunkten A1 -A13 in der Darstellung TNI enthalten. Die Darstellung TNI zeigt vorliegend auch die relative Position der nutzerseitigen Netzwerkeinrichtungen U1-U5 zueinander.

Auf der Basis der Darstellung TNI kann ein Nutzer des Konfigurationswerkzeugs KC sozusagen sein privates Netzwerk PN planen und konfigurieren. Dabei sind mehrere Vorgehensweisen möglich: der Benutzer definiert per Bedienereingaben UIN an den Eingabemitteln IN, welche der Zugangspunkte A1-A13 über das Übertragungsnetzwerk TN miteinander verbunden werden sollen. Hierzu kann z.B. eine Tabelle oder Liste mit entsprechenden Vorgaben eingegeben werden und/oder es können die Zugangspunkt- Symbole SA1-SA13 z.B. über eine Mausaktion miteinander verbunden werden. Der Bediener kann zudem den Verlauf der nutzerseitigen Verbindungen auf dem Übertragungsnetzwerk TN vorgeben, beispielsweise indem er die für die nutzerseitigen Verbindungen zu benutzenden Verbindungswege 1-17 des Übertragungsnetzwerks TN angibt. Der Bediener könnte beispielsweise bei einer Verbindung V613 zwischen den Zugangspunkten A6 und A13 angeben, dass der Verbindungsweg 6 zu benutzen ist. Es ist auch möglich, dass das Konfigurationswerkzeug KC für eine nutzerseitige Verbindung geeignete Verbindungswege des Übertragungsnetzwerks TN selbständig ermittelt.

Das Konfigurationswerkzeug KC erfasst - vorliegend mit Hilfe des Konfigurationsmoduls KM - die Bedienereingaben UIN. Das Konfigurationsmodul KM erfasst und überprüft die Bedienereingaben UIN mittels einer Prüffunktion CHK und gibt gegebenenfalls eine Fehlermeldung ERR aus. Anhand der geprüften Bedienereingaben UIN erzeugt das Konfigurationswerkzeug KC die Konfigurationsdaten KON. Dabei kann das Konfigurationswerkzeug KC die Konfigurationsdaten KON mit einem optional vorhandenen Optimierungsmodul OP optimieren, z.B. kürzere und/oder ausfallsichere Verbindungswege, kostengünstiger nutzbare und/oder ausfallsichere Netzwerkeinrichtungen des Übertragungsnetzwerks TN auswählen oder dergleichen. Das Optimierungsmodul OPdas prinzipiell auch bei dem Management-Modul MM vorgesehen sein könnte - kann bei einer derartigen Optimierung nur jeweils einen einzelnen Verbindungsweg bzw. eine einzelne Netzwerkeinrichtung betrachten. Vorzugsweise jedoch bewertet das Optimierungsmodul OP das Netzwerk PN insgesamt, d.h. beispielsweise eine Netz-Verfügbarkeit des Netzwerks PN insgesamt.

Das Optimierungsmodul OP oder eine Sendefunktion SND übermitteln die Konfigurationsdaten KON an den Server MS1, der diese mit den Verbindungsmitteln TR und einer Empfangsfunktion RV des Management-Moduls MM empfängt. Auch das Management-Modul MM enthält eine Prüffunktion CHK zur Überprüfung der Konfigurationsdaten KON und zur Ausgabe einer Fehlermeldung bei einem Plausibilitätsfehler. Eine Äquivalenzfunktion EQU setzt die Angaben der Konfigurationsdaten KON in Instruktionen INS um, die eine Sendefunktion DO an die Netzwerkeinrichtungen A1-A13, K1-K7, MUX des Übertragungsnetzwerks TN sendet. Anhand der Instruktionen INS richten die Netzwerkeinrichtungen A1-A13, K1-K7, MUX die gemäß den Konfigurationsdaten KON einzurichtenden nutzerseitigen Verbindungen auf dem Übertragungsnetzwerk TN ein.

Es ist auch möglich, dass die Äquivalenzfunktion EQU die nutzerseitigen Anforderungen nicht eins zu eins, sondern zumindest teilweise äquivalent umsetzt, d.h. eine nutzerseitige Verbindung z.B. aus Gründen einer gleichmäßigeren Auslastung des Übertragungsnetzwerks TN über einen alternativen Verbindungsweg und/oder über eine alternative Netzwerkeinrichtung führt, wobei diese jedoch vorzugsweise eine zumindest gleichwertige Verfügbarkeit aufweisen wie der nutzerseitig an sich gewünschte Verbindungsweg bzw. die nutzerseitig an sich gewünschte Netzwerkeinrichtung.

Ferner entnimmt die Äquivalenzfunktion EQU den Konfigurationsdaten KON beispielsweise. dass die Verbindungen V 19 und V84 über die logische Netzwerkeinrichtung SK1 führen soll. Die logische Netzwerkeinrichtung SK1 repräsentiert die Netzknoten K1 und K3 sowie den Verbindungsweg 3. Die Anforderung der Verbindungen V19 und V84 setzt die Äquivalenzfunktion EQU in die Instruktionen INS z.B. derart um, dass die Verbindung V19 über den Netzknoten K1 und die Verbindung V84 über den Netzknoten K3 führt. Mit anderen Worten, das Management System NMS, d.h. vorliegend die Äquivalenzfunktion EQU, wertet die Konfigurationsdaten KON derart aus, dass es eine nutzerseitige Verbindung, die einen logischen Verbindungsweg und/oder eine logische Netzwerkeinrichtung betrifft, auf jeweils einen oder mehrere physikalisch in dem Übertragungsnetzwerk TN vorhandene, dem logischen Verbindungsweg bzw. der logische Netzwerkeinrichtung zugeordnete Verbindungswege bzw. Netzwerkeinrichtungen projiziert.

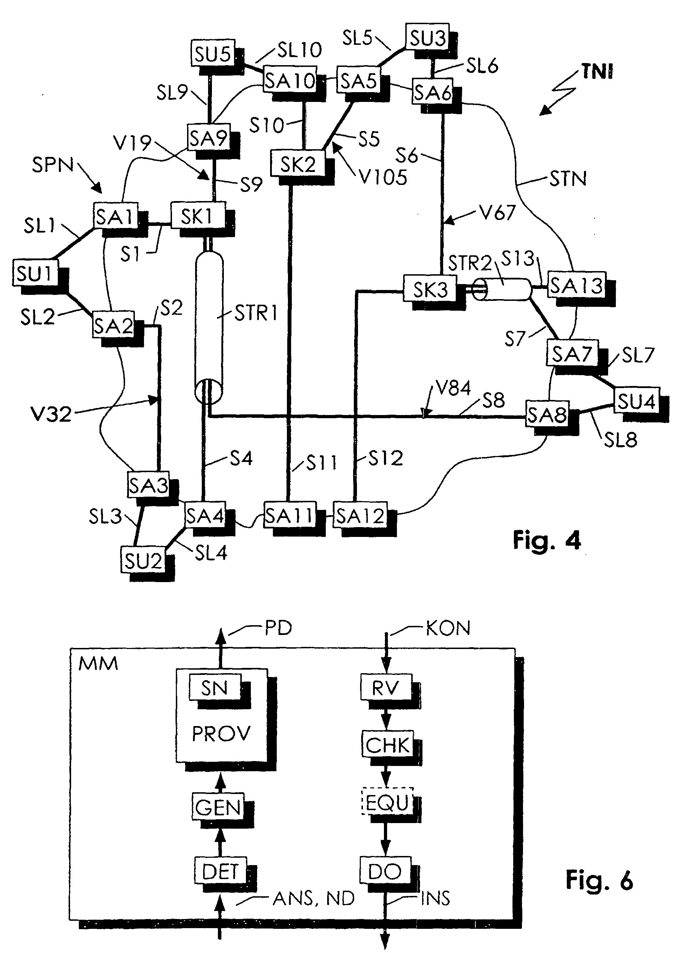

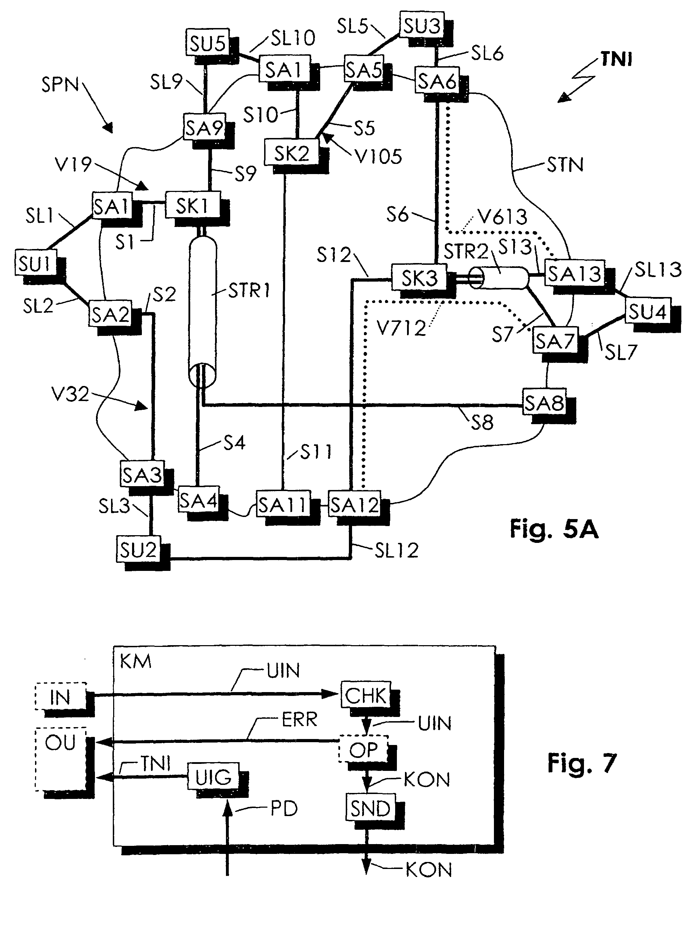

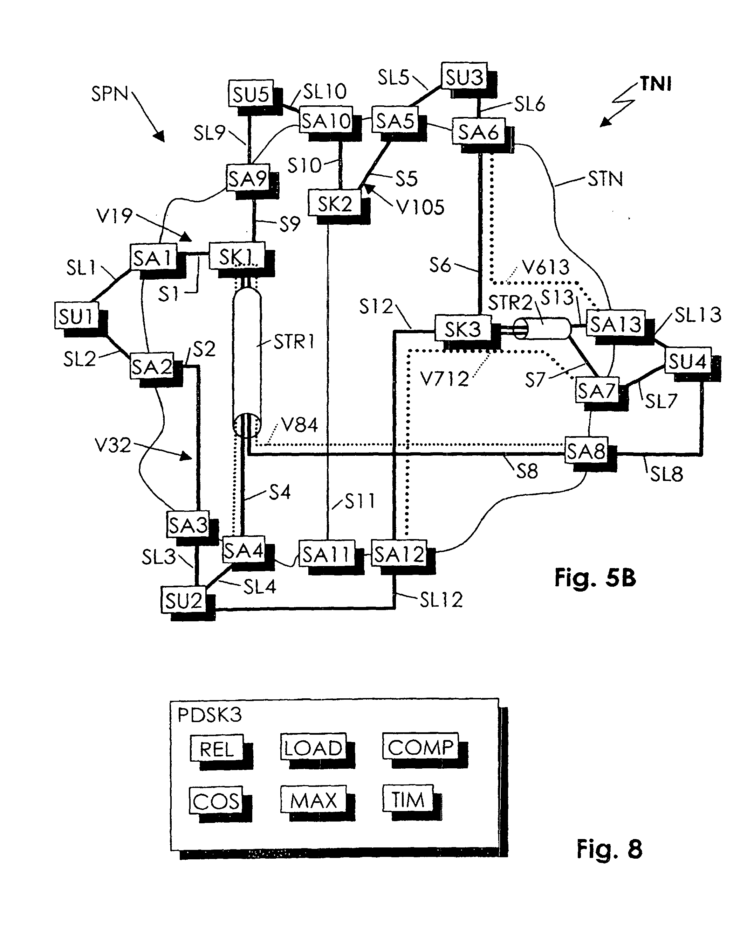

Zwar könnte man prinzipiell die eingeschränkte Verfügbarkeit des Netzwerks PN gemäß Figuren 3 und 4 akzeptieren. Auf der Grundlage der topologischen oder quasi-topologischen Darstellung TNI gemäß Figur 4 können jedoch am Konfigurationswerkzeug KC beispielsweise die in den Figuren 5A und 5B gezeigten Varianten des Netzwerks PN entwickelt werden, bei denen die Verfügbarkeit teilweise verbessert ist.

Bei der Variante nach Figur 5A ist auf dem Übertragungsnetzwerk TN beispielsweise anstelle der Verbindung V84 eine Verbindung V712 zwischen den Zugangspunkten A12 und A7 und anstelle der Verbindung V67 eine Verbindung V613 zwischen den Zugangspunkten A6 und A13 eingerichtet. Die nutzerseitige Netzwerkeinrichtung U2 ist nicht mit dem Zugangspunkt A4, sondern über eine Verbindung L12 mit dem Zugangspunkt A12 verbunden, was in der Darstellung TNI durch entsprechende Symbole SL12, SA12 veranschaulicht ist. Ferner ist die Netzwerkeinrichtung U4 statt mit dem Zugangspunkt A8 mit dem Zugangspunkt A 13 über eine Verbindung L13 verbunden, veranschaulicht durch entsprechende Symbole SL13, SA13. Gegenüber der Variante gemäß Figur 4 ist die Verfügbarkeit des Netzwerks PN durch die neue Verbindung V712 zwar nicht verbessert, da die Verbindungen und V613 und V712 gemeinsam über die Trasse TR2 führen. Allerdings ist die Verbindung V712 kürzer als die Verbindung V84, was die Belastung des Übertragungsnetzwerks TN und üblicherweise die Kosten für den Betrieb des Übertragungsnetzwerks TN verringert.

Bei der Variante nach Figur 5B ist auf dem Übertragungsnetzwerk TN zusätzlich zu der Verbindung V712 wieder die Verbindung V84 eingerichtet. Zudem sind die Netzwerkeinrichtungen U2, U4 über Verbindungen L4 bzw. L8 mit den Zugangspunkten A4 bzw. A8 verbunden. Die Verbindungen V84 und V712 sind beispielsweise redundant, so dass die Verfügbarkeit des Netzwerks PN gegenüber der Variante gemäß Figur 5A verbessert ist. Wenn für jede der Verbindungen V84 und V712 z.B. eine Verfügbarkeit von P = 95 Prozent garantiert ist, wird durch die "Parallelschaltung" der Verbindungen V84 und V712 eine Verbindungs-Verfügbarkeit von 1-(1-P)² = 99,75 Prozent zwischen den Netzwerkeinrichtungen U2 und U4 erzielt. Das Netzwerk PN könnte man bei der Variante nach Figur 5B auch als ein zumindest teilweise vermaschtes Netzwerk bezeichnen.

Der Netzbetreiber des Übertragungsnetzwerks TN könnte den Planungsservice für das Netzwerk PN zwar prinzipiell umsonst anbieten. Es ist jedoch bevorzugt, dass das Management System NMS Gebührendaten PRICE für die Erfassung der Konfigurationsdaten KON und/oder für die Einrichtung von Verbindungen, z.B. der Verbindungen V84 und V712, ermittelt. Anhand der Gebührendaten PRICE kann beispielsweise der Server MS1 eine Gebührenabrechnung erstellen. Es ist auch möglich, dass das Management System NMS die Gebührendaten PRICE an eine Gebührenabrechnungseinrichtung INVOICE übermittelt, die eine Gebührenabrechnung erstellt.

Das Konfigurationswerkzeug KC speichert die Konfigurationsdaten KON und/oder die Planungsdaten PD in einer Datenbank KDB. Beispielsweise kann das Konfigurationswerkzeug KC die Konfiguration des Netzwerks PN gemäß Figur 5A in der Datenbank KDB speichern. Diese gespeicherten Daten können später wieder abgerufen werden; auf Basis dieser Daten kann dann z.B. die Konfiguration des Netzwerks PN gemäß Figur 5B entwickelt werden. Eine Verbindung zum Management System NMS ist zu dieser Entwicklung zunächst nicht erforderlich.

In den Planungsdaten PD und/oder bei der Darstellung TNI können auch weitere vorteilhafte Informationen enthalten sein. Dies wird anhand eines Planungsdatensatzes PDSK3 (siehe Figur 8) deutlich, der die logische Netzwerkeinrichtung SK3 betrifft und einen Bestandteil der Planungsdaten PD bilden kann. Der Planungsdatensatz PDSK3 enthält eine Verfügbarkeitsinformation REL über die individuelle Verfügbarkeit der Netzwerkeinrichtung SK3. Die Verfügbarkeitsinformation REL kann das Konfigurationswerkzeug KC bei der Darstellung TNI beispielsweise durch farbige Markierung des Symbols für die Netzwerkeinrichtung SK3 und/oder als sogenannte Kontextmenü oder Kontextangabe ausgeben. Das Kontextmenü oder die Kontextangabe wird z.B. bei einer Aktivierung des der Netzwerkeinrichtung zugeordneten Symbols, z.B. per Mausklick, angezeigt. Netzwerkeinrichtungen oder Verbindungswege mit hoher oder niedriger Verfügbarkeit/Ausfallsicherheit können z.B. durch grüne bzw. rote Symbole dargestellt sein.

Weitere Informationen sind für die Planung einer privaten Verbindung auf dem Übertragungsnetzwerk TN vorteilhaft und können in den Planungsdaten PD enthalten sein. Beispielsweise können die Planungsdaten eine Kosteninformation über Kosten enthalten, die bei der Nutzung einer oder mehrerer der Einrichtungen des Übertragungsnetzwerks anfallen. Der Planungsdatensatz PDSK3 enthält z.B. eine Kosteninformation COST für die Nutzung des Ringnetzes Rl. Somit kann das nutzerseitige Netzwerk PN auch unter Kostengesichtspunkten optimiert werden.

Ferner können die Planungsdaten PD eine Auslastungsinformation über eine Auslastung, z.B. eine aktuelle und/oder geplante Auslastung, einer oder mehrerer der Einrichtungen des Übertragungsnetzwerks TN enthalten. Der Planungsdatensatz PDSK3 enthält z.B. eine Auslastungsinformation LOAD über die aktuelle Auslastung des Ringnetzes Rl und eine Auslastungsinformation MAX über die maximal mögliche Auslastung des Ringnetzes Rl.

Auch Informationen für einen eventuellen Fehlerfall einer oder mehrerer Einrichtungen des Übertragungsnetzwerks können in den Planungsdaten PD enthalten sein. Der Planungsdatensatz PDSK3 enthält z.B. eine Regresszahlungsinformation COMP über die Höhe von Regresszahlungen im Fehlerfall. Ferner enthält der Planungsdatensatz PDSK3 eine Ausfalldauerinformation TIM über eine typische Ausfalldauer einer oder mehrerer Netzknoten K4 - K7 bis zur Behebung eines Fehlerfalls.

Das Konfigurationswerkzeug KC kann die vorgenannten Informationen REL, COS, LOAD, MAX. TIM, COMP beispielsweise als Tabelle und/oder als Kontextangabe beim Symbol für die Netzwerkeinrichtung SK3 an den Ausgabemitteln OU ausgeben.

Abwandlungen und Weiterbildungen des Ausführungsbeispiels sind ohne Weiteres möglich.

In den Figuren ist z.B. lediglich eine Form der Darstellung TNI schematisch gezeigt. In einer nicht dargestellten anderen Darstellungsform, auf die z.B. mittels eines Mausklicks umgeschaltet werden kann, sind die Netzwerkeinrichtungen A1-A13, K1-K7, MUX beispielsweise auf einer Art Landkarte angeordnet, so dass deren absolute räumliche Positionen ermittelbar sind.

## Patentansprüche

1. Verfahren zum Einrichten mindestens einer Verbindung (V19, V105, V613, V84, V32) in einem Übertragungsnetzwerk (TN) zwischen Zugangspunkten (A1-A13) die mit nutzerseitigen Netzwerkeinrichtungen (U1-U5) verbindbar sind, aufgrund einer Benutzeranforderung, mit den Schritten:
- Ermittlung von Netzwerkdaten (ND) des Übertragungsnetzwerks (TN), enthaltend Daten über Netzwerkeinrichtungen (A1-A13, K1-K7, MUX) und Verbindungswege (1-17) zwischen den Netzwerkeinrichtungen (A1-A13, K1-K7, MUX), über die die mindestens eine nutzerseitige Verbindung (V19, V105, V613, V84, V32) aufgebaut werden kann,
- Erzeugen von Planungsdaten (PD) aus den Netzwerkdaten, die zur Darstellung (TNI) des Übertragungsnetzwerks (TN) geeignet sind und anhand derer zumindest ein Verfügbarkeitskriterium der Netzwerkeinrichtungen (A1-A13, K1-K7, MUX) und/oder der Verbindungswege (1-17) ermittelbar ist,
- Bereitstellung der Planungsdaten (PD) für ein nutzerseitiges Konfigurationswerkzeug (KC) zur Konfiguration der mindestens einen Verbindung (V19, V105, V613, V84, V32),
- Erzeugen von Konfigurationsdaten (KON) zur Einrichtung der mindestens einen Verbindung (V19, V105, V673, V84, V32) in dem Übertragungsnetzwerk (TN) anhand der Planungsdaten (PD),
- Übermitteln der Konfigurationsdaten (KON) an ein netzbetreiberseitiges Netzwerk Management System (NMS) zur Einrichtung der mindestens einen Verbindung (V19, V105, V613, V84, V32)
**gekennzeichnet durch**
- Umsetzen der Konfigurationsdaten in Instruktionsdaten (INS), die in einem für die Netzwerkeinrichtungen (A1 -A13, K1-K7, MUX) verständlichen Format codiert sind, und
- Einrichten der angeforderten Verbindung (V19, V105, V613, V84, V32) gemäß den Konfigurationsdaten (KON) anhand der Instruktionen (INS).

2. Verfahren nach Anspruch 1, bei dem das mindestens eine Verfügbarkeitskriterium zumindest teilweise die Topologie des Übertragungsnetzwerks (TN), nämlich die absoluten räumlichen Positionen der Netzwerkeinrichtungen (A1-A13, K1-K7, MUX) und/oder der Verbindungswege (1-17) des Übertragungsnetzwerks (TN) und/oder die räumlichen Positionen der Netzwerkeinrichtungen (A1-A13, K1-K7, MUX) und/oder der Verbindungswege (1-17) des Übertragungsnetzwerks (TN) relativ zueinander, betrifft.

3. Verfahren nach Anspruch 1, bei dem die Planungsdaten (PD) das mindestens eine Verfügbarkeitskriterium derart repräsentieren, dass räumlich nahe beieinander angeordnete Netzwerkeinrichtungen (K1, K3) und/oder räumlich nahe beieinander angeordnete Verbindungswege (4, 8; 7, 13) als jeweils eine logische Netzwerkeinrichtung (SK1) bzw. als jeweils ein logischer Verbindungsweg (STR1; STR2) dargestellt werden und/oder dass mindestens ein in dem Übertragungsnetzwerk (TN) vorhandenes Ringnetz (Rl) als eine einzige logische Netzwerkeinrichtung (SK3) graphisch dargestellt wird.

4. Verfahren nach Anspruch 3, bei dem Verbindungswege (4, 8), die auf zumindest abschnittsweise auf einer gemeinsamen Trasse (TR1) verlaufenden Verbindungsleitungen vorgesehen sind, und/oder auf einer einzigen Verbindungsleitung vorgesehene Übertragungskanälen der Verbindungsleitung zugeordnete Verbindungswege (1-17) als jeweils ein logischer Verbindungsweg (STR1) dargestellt werden.

5. Verfahren nach Anspruch 1, bei dem das mindestens eine Verfügbarkeitskriterium die jeweilige Ausfallsicherheit der Netzwerkeinrichtungen (A1-A13, K1-K7, MUX) und/oder der Verbindungswege (1-17) des Übertragungsnetzwerks (TN) betrifft.

6. Verfahren nach Anspruch 1, bei dem die Planungsdaten (PD) eine Kosteninformation (COS) über Kosten für eine Nutzung zumindest einer der Netzwerkeinrichtungen (A1-A13, K1-K7, MUX) und/oder zumindest eines der Verbindungswege (1-17) des Übertragungsnetzwerks (TN) enthalten.

7. Verfahren nach Anspruch 1, **dadurch gekennzeichnet, dass** die Planungsdaten (PD) eine Auslastungsinformation (LOAD, MAX) über eine aktuelle und/oder geplante und/oder maximale Auslastung zumindest einer der Netzwerkeinrichtungen (A1-A13, K1-K7, MUX) und/oder zumindest eines der Verbindungswege (1-17) des Übertragungsnetzwerks (TN) enthalten.

8. Verfahren nach Anspruch 1, **dadurch gekennzeichnet, dass** anhand der Planungsdaten (PD) zumindest ein erster Verbindungsweg (1, 9) und ein zweiter Verbindungsweg (10, 5) der Verbindungswege (1-17) als hinsichtlich des mindestens einen Verfügbarkeitskriteriums voneinander separate Verbindungswege ermittelt werden, wobei die mindestens eine Verbindung (V19) auf dem mindestens einen ersten Verbindungsweg (1, 9) und eine zweite nutzerseitige Verbindung (V105) auf dem mindestens einen zweiten Verbindungsweg (10, 5) geplant werden.

9. Verfahren nach Anspruch 1, **dadurch gekennzeichnet, dass** die Planungsdaten (PD) durch ein Netzwerk Management System (NMS) erzeugt und an das Konfigurationswerkzeug (KC) übermittelt werden.

10. Verfahren nach Anspruch 9, **dadurch gekennzeichnet, dass** das Konfigurationswerkzeug (KC) die Konfigurationsdaten (KON) für die mindestens eine Verbindung (V19, V105, V613, V84, V32) unter Berücksichtigung mindestens eines die für die mindestens eine Verbindung (V19, V105, V613, V84, V32) erforderlichen Netzwerkeinrichtungen (A1-A13, K1-K7, MUX) und/oder Verbindungswege (1-17) des Übertragungsnetzwerks (TN) betreffenden Konfigurationskriteriums erzeugt und/oder eine Bedienereingabe (UIN) zur Einrichtung der mindestens einen Verbindung (V19, V105, V613, V84, V32) hinsichtlich des mindestens einen Konfigurationskriteriums überprüft.

11. Verfahren nach Anspruch 1, **dadurch gekennzeichnet, dass** das Netzwerk Management System (NMS) Gebührendaten (PRICE) für die Erfassung der Konfigurationsdaten (KON) und/oder die Einrichtung der mindestens einen Verbindung (V19, V105, V613, V84, V32) ermittelt.

12. Verfahren nach Anspruch 11, **dadurch gekennzeichnet, dass** das Netzwerk Management System (NMS) die Gebührendaten (PRICE) an eine Gebührenabrechnungseinrichtung (INVOICE) übermittelt.

13. Server eines Netzwerk Management Systems zum Einrichten mindestens einer Verbindung (V19, V105, V613, V84, V32) in einem Übertragungsnetzwerk (TN) zwischen Zugangspunkten (A1-A13) die mit nutzerseitigen Netzwerkeinrichtungen (U1-U5) verbindbar sind, aufgrund einer Benutzeranforderung, mit Mitteln zur Ausführung der Schritte:
- Ermittlung von Netzwerkdaten (ND) des Übertragungsnetzwerks (TN), enthaltend Daten über Netzwerkeinrichtungen (A1-A13, K1-K7, MUX) und Verbindungswege (1-17) zwischen den Netzwerkeinrichtungen (A1-A13, K1-K7, MUX), über die die mindestens eine nutzerseitige Verbindung (V19, V105, V613, V84, V32) aufgebaut werden kann,
- Erzeugen von Planungsdaten (PD) aus den Netzwerkdaten, die zur Darstellung (TNI) des Übertragungsnetzwerks (TN) geeignet sind und anhand derer zumindest ein Verfügbarkeitskriterium der Netzwerkeinrichtungen (A1-A13, K1-K7, MUX) und/oder der Verbindungswege (1-17) ermittelbar ist,
- Bereitstellung der Planungsdaten (PD) für ein nutzerseitiges Konfigurationswerkzeug (KC) zum Erzeugen von Konfigurationsdaten (KON) zu Konfiguration der mindestens einen Verbindung (V19, V105, V613, V84, V32),
wobei der Server Mittel (TR, MM) zur Übermittlung der Planungsdaten (PD) an das Konfigurationswerkzeug (KC) und Mittel (TR, MM) zum Empfang von Konfigurationsdaten (KON) von dem Konfigurationswerkzeug (KC) aufweist und
**dadurch gekennzeichnet ist, dass** er ausserdem Mittel zum Umsetzen der Konfigurationsdaten (KON in Instruktionen (INS), die in einem für die Netzwerkeinrichtungen (A1-A13, K1-K7, MUX) verständlichen Format codiert sind, und zum Einrichten der mindestens einen Verbindung (V19, V105, V613, V84, V32) gemäß der Konfigurationsdaten (KON) anhand der Instruktionen (INS) aufweist.

14. Management-Modul für einen Server (MS1) eines Netzwerk Management Systems (NMS) zum Einrichten mindestens einer Verbindung (V19,V105, V613, V84, V32) in einem Übertragungsnetzwerk (TN) zwischen Zugangspunkten (A1-A13) die mit nutzerseitigen Netzwerkeinrichtungen (U1-U5) verbindbar sind, aufgrund einer Benutzeranforderung, wobei das Management-Modul (MM) von Steuermitteln (CPU) des Servers (MS1) ausführbaren Programmcode enthält, wobei der Server (MS1) bei der Ausführung des Programmcodes die folgenden Funktionen ausführt:
- Ermittlung von Netzwerkdaten (ND) des Übertragungsnetzwerks (TN), enthaltend Daten über Netzwerkeinrichtungen (A1-A13, K1-K7, MUX) und Verbindungswege (1-17) zwischen den Netzwerkeinrichtungen (A1-A13, K1-K7, MUX), über die die mindestens eine nutzerseitige Verbindung (V19, V105, V613, V84, V32) aufgebaut werden kann,
- Erzeugen von Planungsdaten (PD) aus den Netzwerkdaten, die zur Darstellung (TNI) des Übertragungsnetzwerks (TN) geeignet sind und anhand derer zumindest ein Verfügbarkeitskriterium der Netzwerkeinrichtungen (A1-A13, K1-K7, MUX) und/oder der Verbindungswege (1-17) ermittelbar ist,
- Bereitstellung der Planungsdaten (PD) für ein nutzerseitiges Konfigurationswerkzeug (KC) zum Erzeugen von Konfigurationsdaten (KON) zur Konfiguration der mindestens einen Verbindung (V19, V105, V613, V84, V32),
gekenzeichnet durch
- Umsetzen von dem Konfigurationswerkzeug (KC) empfangener Konfigurationsdaten (von) in Instruktionen (INS), die in einem für die Netzwerkeinrichtungen (A1-A13, K1-K7, MUX) verständlichen Format codiert sind, und
- Einrichten der mindestens einen Verbindung (V19, V105, V613, V84, V32) gemäß der Konfigurationsdaten (KON) anhand der Instruktionen (INS).

15. Konfigurationswerkzeug zur Konfiguration mindestens einer nutzerseitigen Verbindung (V19, V105, V613, V84, V32) zwischen mit nutzerseitigen Netzwerkeinrichtungen (U1-U5) verbindbaren Zugangspunkten (A1-A13) eines Übertragungsnetzwerks (TN), mit
- Verbindungsmitteln (TR) zum Empfangen von Planungsdaten (PD), die zur Darstellung (TNI) des Übertragungsnetzwerks (TN) geeignet sind und anhand derer zumindest ein Verfügbarkeitskriterium der Netzwerkeinrichtungen (A1-A13, K1-K7, MUX) und/oder der Verbindungswege (1-17) ermittelbar ist;
- Erzeugungsmitteln (KM, CHK, OP) zum Erzeugen von Konfigurationsdaten (KON), die zur Einrichtung der mindestens einen Verbindung (V19, V105, V613, V84, V32) in dem Übertragungsnetzwerk (TN) von einem netzbetreiberseitigen Netzwerk Management System (NMS) in Instruktionsdaten (INS) umgesetzt werden müssen, die in einem für die Netzwerkeinrichtungen (A1-A13, K1-K7, MUX) verständlichen Format codiert sind und
- Verbindungsmitteln (TR) zum Übermitteln der Konfigurationsdaten (KON) an das Netzwerk Management System (NMS), so dass das Netzwerk Management System (NMS) die mindestens eine Verbindung (V19, V105, V613, V84, V32) gemäß den Konfigurationsdaten (KON) anhand der Instruktionsdaten (INS) einrichten kann.

16. Konfigurationswerkzeug nach Anspruch 15 mit Mitteln (UIG) zum Anzeigen einer graphischen Darstellung (TNI) des Übertragungsnetzwerks (TN) anhand von Planungsdaten (PD) über Netzwerkeinrichtungen (A1-A13, K1-K7, MUX) des Übertragungsnetzwerks (TN) und Verbindungswege (1-17) zwischen diesen Netzwerkeinrichtungen (A1-A13, K1-K7, MUX), über die die mindestens eine nutzerseitige Verbindung (V19, V105, V613, V84, V32) aufgebaut werden kann, wobei die graphische Darstellung (TNI) die Visualisierung zumindest eines Verfügbarkeitskriteriums der Netzwerkeinrichtungen (A1-A13, K1-K7, MUX) und/oder der Verbindungswege (1-17) enthält.

17. Konfigurationswerkzeug nach Anspruch 15, bei dem die Erzeugungsmittel (KM, CHK, OP) zum Erzeugen der Konfigurationsdaten (KON) für die mindestens eine Verbindung (V19, V105, V613, V84, V32) unter Berücksichtigung mindestens eines die für die mindestens eine Verbindung (V19, V105, V613, V84, V32) erforderlichen Netzwerkeinrichtungen (A1-A13, K1-K7, MUX) und/oder Verbindungswege (1-17) des Übertragungsnetzwerks (TN) betreffenden Konfigurationskriteriums und/oder zum Überprüfen von zur Einrichtung der mindestens einen Verbindung (V19, V105, V613, V84, V32) vorgesehenen Bedienereingaben (UIN) anhand des mindestens einen Konfigurationskriteriums ausgestaltet sind.

## Claims

1. Method for setting up at least one connection (V19, V105, V613, V84, V32) in a transmission network (TN) between access points (A1-A13) which can be connected to user-side network devices (U1-U5), based on a user request, with the steps:
- determining network data (ND) of the transmission network (TN), including data on network devices (A1-A13, K1-K7, MUX) and connection paths (1-17) between the network devices (A1-A13, K1-K7, MUX), via which the at least one user-side connection (V19, V105, V613, V84, V32) can be constructed,
- generating from the network data planning data (PD) which are suitable for representation (TNI) of the transmission network (TN) and using which at least one availability criterion of the network devices (A1-A13, K1-K7, MUX) and/or the connection paths (1-17) can be determined,
- providing the planning data (PD) for a user-side configuration tool (KC) for configuring the at least one connection (V19, V105, V613, V84, V32),
- generating configuration data (KON) for setting up the at least one connection (V19, V105, V613, V84, V32) in the transmission network (TN) using the planning data (PD),
- communicating the configuration data (KON) to a network-operator-side network management system (NMS) for setting up the at least one connection (V19, V105, V613, V84, V32), **characterised by**
- conversion of the configuration data into instruction data (INS), which are coded in a format understandable to the network devices (A1-A13, K1-K7, MUX) and
- setting up the requested connection (V19, V105, V613, V84, V32) according to the configuration data (KON) using the instructions (INS).

2. Method according to claim 1, in which the at least one availability criterion relates at least partially to the topology of the transmission network (TN), namely the absolute spatial positions of the network devices (A1-A13, K1-K7, MUX) and/or the connection paths (1-17) of the transmission network (TN) and/or the spatial positions of the network devices (A1-A13, K1-K7, MUX) and/or the connection paths (1-17) of the transmission network (TN) relative to one another.

3. Method according to claim 1, in which the planning data (PD) represent the at least one availability criterion in such a way that network devices (K1, K3) arranged spatially close together and/or connection paths (4, 8; 7, 13) arranged spatially close together are represented as one logical network device (SK1) in each case or as one logical connection path (STR1; STR2) in each case and/or that at least one ring network (RI) present in the transmission network (TN) is graphically represented as a single logical network device (SK3).

4. Method according to claim 3, in which connection paths (4, 8) provided on connection lines running at least in sections on a common route (TR1) and/or connection paths (1-17) assigned to transmission channels of the connection line provided on a single connection line are represented as one logical connection path (STR1) in each case.

5. Method according to claim 1, in which the at least one availability criterion relates to the respective fail-safe protection of the network devices (A1-A13, K1-K7, MUX) and/or the connection paths (1-17) of the transmission network (TN).

6. Method according to claim 1, in which the planning data (PD) include an item of cost information (COS) on costs for using at least one of the network devices (A1-A13, K1-K7, MUX) and/or at least one of the connection paths (1-17) of the transmission network (TN).

7. Method according to claim 1, **characterised in that** the planning data (PD) include an item of load information (LOAD, MAX) on a current and/or planned and/or maximum load of at least one of the network devices (A1-A13, K1-K7, MUX) and/or of at least one of the connection paths (1-17) of the transmission network (TN).

8. Method according to claim 1, **characterised in that** using the planning data (PD) at least one first connection path (1, 9) and one second connection path (10, 5) of the connection paths (1-17) are determined as connection paths separate from one another in respect of the at least one availability criterion, wherein the at least one connection (V19) is planned on the at least one first connection path (1, 9) and a second user-side connection (V105) is planned on the at least one second connection path (10, 5).

9. Method according to claim 1, **characterised in that** the planning data (PD) are generated by a network management system (NMS) and communicated to the configuration tool (KC).

10. Method according to claim 9, **characterised in that** the configuration tool (KC) generates the configuration data (KON) for the at least one connection (V19, V105, V613, V84, V32) taking into account at least one configuration criterion relating to the network devices (A1-A13, K1-K7, MUX) and/or connection paths (1-17) of the transmission network (TN) necessary for the at least one connection (V19, V105, V613, V84, V32) and/or checks an operator input (UIN) for setting up the at least one connection (V19, V105, V613, V84, V32) in respect of the at least one configuration criterion.

11. Method according to claim 1, **characterised in that** the network management system (NMS) determines charging data (PRICE) for acquiring the configuration data (KON) and/or the setup of the at least one connection (V19, V105, V613, V84, V32).

12. Method according to claim 11, **characterised in that** the network management system (NMS) communicates the charging data (PRICE) to a charge billing device (INVOICE).

13. Server of a network management system for setting up at least one connection (V19, V105, V613, V84, V32) in a transmission network (TN) between access points (A1-A13) which can be connected to user-side network devices (U1-U5), based on a user request, with means for executing the steps:
- determining network data (ND) of the transmission network (TN), including data on network devices (A1-A13, K1-K7, MUX) and connection paths (1-17) between the network devices (A1-A13, K1-K7, MUX), via which the at least one user-side connection (V19, V105, V613, V84, V32) can be constructed,
- generating from the network data planning data (PD) which are suitable for representation (TNI) of the transmission network (TN) and using which at least one availability criterion of the network devices (A1-A13, K1-K7, MUX) and/or the connection paths (1-17) can be determined,
- providing the planning data (PD) for a user-side configuration tool (KC) for generating configuration data (KON) for configuring the at least one connection (V19, V105, V613, V84, V32),
wherein the server has means (TR, MM) for communicating the planning data (PD) to the configuration tool (KC) and means (TR, MM) for receiving configuration data (KON) from the configuration tool (KC) and is **characterised in that** it additionally has means for converting the configuration data (KON) into instructions (INS), which are coded in a format understandable to the network devices (A1-A13, K1-K7, MUX), and for setting up the at least one connection (V19, V105, V613, V84, V32) according to the configuration data (KON) using the instructions (INS).

14. Management module for a server (MS1) of a network management system (NMS) for setting up at least one connection (V19, V105, V613, V84, V32) in a transmission network (TN) between access points (A1-A13) which can be connected to user-side network devices (U1-U5), based on a user request, wherein the management module (MM) includes a program code executable by control means (CPU) of the server (MS1), wherein the server (MS1) executes the following functions during execution of the program code:
- determining network data (ND) of the transmission network (TN), including data on network devices (A1-A13, K1-K7, MUX) and connection paths (1-17) between the network devices (A1-A13, K1-K7, MUX), via which the at least one user-side connection (V19, V105, V613, V84, V32) can be constructed,
- generating from the network data planning data (PD) which are suitable for representation (TNI) of the transmission network (TN) and using which at least one availability criterion of the network devices (A1-A13, K1-K7, MUX) and/or the connection paths (1-17) can be determined,
- providing the planning data (PD) for a user-side configuration tool (KC) for generating configuration data (KON) for configuring the at least one connection (V19, V105, V613, V84, V32), **characterised by**
- conversion of configuration data (KON) received by the configuration tool (KC) into instructions (INS), which are coded in a format understandable to the network devices (A1-A13, K1-K7, MUX), and
- setting up the at least one connection (V19, V105, V613, V84, V32) according to the configuration data (KON) using the instructions (INS).

15. Configuration tool for configuring at least one user-side connection (V19, V105, V613, V84, V32) between access points (A1-A23) of a transmission network (TN) which can be connected to user-side network devices (U1-U5) with
- connection means (TR) for receiving planning data (PD) which are suitable for representation (TNI) of the transmission network (TN) and using which at least one availability criterion of the network devices (A1-A13, K1-K7, MUX) and/or the connection paths (1-17) can be determined,
- generating means (KM, CHK, OP) for generating configuration data (KON) which have to be converted by a network-operator-side network management system (NMS) into instruction data (INS), which are coded in a format understandable to the network devices (A1-A13, K1-K7, MUX), for setting up the at least one connection (V19, V105, V613, V84, V32) in the transmission network (TN) and
- connection means (TR) for communicating the configuration data (KON) to the network management system (NMS), so the network management system (NMS) can set up the at least one connection (V19, V105, V613, V84, V32) according to the configuration data (KON) using the instruction data (INS).

16. Configuration tool according to claim 15 with means (UIG) for displaying a graphic representation (TNI) of the transmission network (TN) using planning data (PD) on network devices (A1-A13, K1-K7, MUX) of the transmission network (TN) and communication paths (1-17) between these network devices (A1-A13, K1-K7, MUX), via which the at least one user-side connection (V19, V105, V613, V84, V32) can be constructed, wherein the graphic representation (TNI) includes the visual display of at least one availability criterion of the network devices (A1-A13, K1-K7, MUX) and/or the connection paths (1-17).

17. Configuration tool according to claim 15, in which the generating means (KM, CHK, OP) are designed for generating the configuration data (KON) for the at least one connection (V19, V105, V613, V84, V32), taking into account at least one configuration criterion relating to the network devices (A1-A13, K1-K7, MUX) and/or connection paths (1-17) of the transmission network (TN) necessary for the at least one connection (V19, V105, V613, V84, V32), and/or for checking operator inputs (UIN) provided for setting up the at least one connection (V19, V105, V613, V84, V32) using the at least one configuration criterion.

## Revendications

1. Procédé pour la création d'au moins une liaison (V19, V105, V613, V84, V32) dans un réseau de transmission (TN) entre des points d'accès (A1 à A13), qui peuvent être reliés à des appareils du réseau (U1 à U5) côté utilisateur, à la suite d'une demande d'utilisateur, comprenant les étapes suivantes :
- détermination de données de réseau (ND) du réseau de transmission (TN) contenant des données sur des appareils du réseau (A1, A13, K1 à K7, MUX) et des voies de liaison (1 à 17) entre les appareils du réseau (A1 à A13, K1 à K7, MUX), par lesquels la au moins une liaison (V29, V105, V613, V84, V32) côté utilisateur peut être établie,
- génération de données de planification (PD) à partir des données du réseau, qui sont appropriées pour la représentation (TNI) du réseau de transmission (TN) et à l'aide desquelles au moins un critère de disponibilité des appareils du réseau (A1 à A13, K1 à K7, MUX) et/ou des voies de liaison (1 à 17) peut être déterminé,
- mise à disposition des données de planification (PD) pour un outil de configuration (KC) coté utilisateur pour la configuration de la au moins une liaison (V19, V105, V613, V84, V32),
- génération de données de configuration (KON) pour la création de la au moins une liaison (V19, V105, V613, V84, V32) dans le réseau de transmission (TN) à l'aide des données de planification (PD),
- transmission des données de configuration (KON) à un système de gestion de réseau (NMS) côté exploitant du réseau pour la création de la au moins une liaison (V19, V105, V613, V84, V32) **caractérisé par**
- conversion des données de configuration en données d'instruction (INS), qui sont codées dans un format compréhensible pour les appareils du réseau (A1 à 13, K1 à K7, MUX), et
- création de la liaison demandée (V19, V105, V613, V84, V32) selon les données de configuration (KON) à l'aide des instructions (INS).

2. Procédé selon la revendication 1, dans lequel le au moins un critère de disponibilité concerne au moins partiellement la topologie du réseau de transmission (TN), c'est-à-dire les positions absolues dans l'espace des appareils du réseau (A1 à A13, K1 à K7, MUX) et/ou des voies de liaison (1 à 17) du réseau de transmission (TN) et/ou les positions dans l'espace des appareils du réseau (A1 à A13, K1 à K7, MUX) et/ou des voies de liaison (1 à 17) du réseau de transmission (TN) les uns par rapport aux autres.

3. Procédé selon la revendication 1, dans lequel les données de planification (PD) représentent le au moins un critère de disponibilité de telle sorte que les appareils du réseau (K1, K3) disposés dans l'espace à proximité les uns des autres et/ou des voies de liaison (4, 8 ; 7, 13) disposées dans l'espace à proximité les unes des autres sont représentés sous la forme de respectivement un appareil de réseau logique (SK1) ou d'une voie de liaison logique (STR1 ; STR2) et/ou en ce qu'au moins un réseau annulaire (R1) présent dans le réseau de transmission (TN) est représenté graphiquement comme un appareil de réseau (SK3) logique unique.

4. Procédé selon la revendication 3, dans lequel des voies de liaison (4, 8), qui sont prévues sur des lignes de liaison agencées au moins par endroits sur un tracé commun (TR1), et/ou des voies de liaison (1 à 17) attribuées à des canaux de transmission, prévus sur une seule ligne de liaison, de la ligne de liaison sont représentées sous la forme de respectivement une voie de liaison (STR1) logique.

5. Procédé selon la revendication 1, dans lequel le au moins un critère de disponibilité concerne la sécurité respective vis-à-vis des défaillances des appareils du réseau (A1 à A13, K1 à K7, MUX) et/ou des voies de liaison (1 à 17) du réseau de transmission (TN).

6. Procédé selon la revendication 1, dans lequel les données de planification (PD) contiennent une information (COS) concernant des coûts pour une utilisation d'au moins l'un des appareils du réseau (A1 à A13, K1 à K7, MUX) et/ou d'au moins l'une des voies de liaison (1 à 17) du réseau de transmission (TN).

7. Procédé selon la revendication 1, **caractérisé en ce que** les données de planification (PD) contiennent une information (LOAD, MAX) sur une utilisation actuelle et/ou planifiée et/ou au maximale d'au moins l'un des appareils du réseau (A1 à A13, K1 à K7, MUX) et/ou d'au moins l'une des voies de liaison (1 à 17) du réseau de transmission (TN).

8. Procédé selon la revendication 1, **caractérisé en ce que**, à l'aide des données de planification (PD), au moins une première voie de liaison (1, 9) et une seconde voie de liaison (10, 5) des voies de liaison (1 à 17) sont déterminées en tant que voies de liaison séparées les unes des autres en ce qui concerne le au moins un critère de disponibilité, la au moins une liaison (V19) étant planifiée sur la au moins une première voie de liaison (1, 9) et une seconde liaison (V105) côté utilisateur étant planifiée sur la au moins une seconde voie de liaison (10, 5).

9. Procédé selon la revendication 1, **caractérisé en ce que** les données de planification (PD) sont générées par un système de gestion de réseau (NMS) et sont transmises à l'outil de configuration (KC).

10. Procédé selon la revendication 9, **caractérisé en ce que** l'outil de configuration (KC) génère les données de configuration (KON) pour la au moins une liaison (V19, V105, V613, V84, V32) en tenant compte d'au moins un critère de configuration concernant les appareils du réseau (A1 à A13, K1 à K7, MUX) nécessaires pour la au moins une liaison (V19, V105, V613, V84, V32) et/ou des voies de liaison (1 à 17) du réseau de transmission (TN) et/ou contrôle une entrée d'utilisateur (UIN) pour la création de la au moins une liaison (V19, V105, V613, V84, V32) en ce qui concerne le au moins un critère de configuration.

11. Procédé selon la revendication 1, **caractérisé en ce que** le système de gestion de réseau (NMS) détermine des données de taxe (PRICE) pour l'enregistrement des données de configuration (KON) et/ou la création de la au moins une liaison (V19, V105, V613, V84, V32).

12. Procédé selon la revendication 11, **caractérisé en ce que** le système de gestion de réseau (NMS) transmet les données de taxe (PRICE) à un système de facturation de taxe (INVOICE).

13. Serveur d'un système de gestion de réseau pour la création d'au moins une liaison (V19, V105, V613, V84, V32) dans un réseau de transmission (TN) entre des points d'accès (A1 à A13), qui peuvent être reliés à des appareils du réseau (U1 à U5) côté utilisateur, à la suite d'une demande d'utilisateur, avec des moyens pour la réalisation des étapes suivantes :
- détermination de données du réseau (ND) du réseau de transmission (TN), contenant des données sur des appareils du réseau (A1 à A13, K1 à K7, MUX) et des voies de liaison (1 à 17) entre les appareils du réseau (A1 à A13, K1 à K7, MUX), par lesquels la au moins une liaison côté utilisateur (V19, V105, V613, V84, V32) peut être établie,
- production de données de planification (PD) à partir des données du réseau qui sont appropriées pour la représentation (TNI) du réseau de transmission (TN) et à l'aide desquelles au moins un critère de disponibilité des appareils du réseau (A1 à A13, K1 à K7, MUX) et/ou des voies de liaison (1 à 17) peut être déterminé,
- mise à disposition des données de planification (PD) pour un outil de configuration (KC) côté utilisateur pour la génération de données de configuration (KON) pour la configuration de la au moins une liaison (V19, V105, V613, V84, V32),
le serveur présentant des moyens (TR, MM) pour la transmission des données de planification (PD) à l'outil de configuration (KC) et des moyens (TR, MM) pour la réception de données de configuration (KON) de l'outil de configuration (KC) et
**caractérisé en ce qu'**il présente également des moyens pour la conversion des données de configuration (KON) en instructions (INS), qui sont codées dans un format compréhensible pour les appareils du réseau (A1 à A13, K1 à K7, MUX), et pour la création de la au moins une liaison (V19, V105, V613, V84, V32) selon les données de configuration (KON) à l'aide des instructions (INS).

14. Module de gestion pour un serveur (MS1) d'un système de gestion de réseau (NMS) pour la création d'au moins une liaison (V19, V105, V613, V84, V32) dans un réseau de transmission (TN) entre des points d'accès (A1 à A13), qui peuvent être reliés à des appareils du réseau (U1 à U5) côté utilisateur, à la suite d'une demande d'utilisateur, le module de gestion (MM) contenant un code de programme pouvant être exécuté par des moyens de commande (CPU) du serveur (MS1) , le serveur (MS1) exécutant les fonctions suivantes lors de l'exécution du code de programme :
- détermination de données du réseau (ND) du réseau de transmission (TN), contenant des données sur les appareils du réseau (A1 à A13, K1 à K7, MUX) et les voies de liaison (1 à 17) entre les appareils du réseau (A1 à A13, K1 à K7, MUX), par lesquels la au moins une liaison (V19, V105, V613, V84, V32) côté utilisateur peut être établie,
- production de données de planification (PD) à partir des données du réseau, qui sont appropriées pour la représentation (TNI) du réseau de transmission (TN) et à l'aide desquelles au moins un critère de disponibilité des appareils du réseau (A1 à A13, K1 à K7, MUX) et/ou les voies de liaison (1 à 17) peut être déterminé,
- mise à disposition des données de planification (PD) pour un outil de configuration (KC) côté utilisateur pour la génération de données de configuration (KON) pour la configuration de la au moins une liaison (V19, V105, V613, V84, V32) **caractérisé par**
- la conversion de données de configuration (KON) reçues de l'outil de configuration (KC) en instructions (INS), qui sont codées dans un format compréhensible pour les appareils du réseau (A1 à A13, K1 à K7, MUX), et
- création de la au moins une liaison (V19, V105, V613, V84, V32) selon les données de configuration (KON) à l'aide des instructions (INS).

15. Outil de configuration pour la configuration d'au moins une liaison (V19, V105, V613, V84, V32) côté utilisateur entre des points d'accès (A1 à A13) pouvant être reliés à des appareils de réseau (U1 à U5) côté utilisateur, d'un réseau de transmission (TN), comprenant,
- des moyens de liaison (TR) pour la réception de données de planification (PD), qui sont appropriées pour la représentation (TNI) du réseau de transmission (TN) et à l'aide desquelles au moins un critère de disponibilité des appareils de réseau (A1 à A13, K1 à K7, MUX) et/ou des voies de liaison (1 à 17) peut être déterminé ;
- des moyens de production (KM, CHK, OP) pour la production de données de configuration (KON), qui doivent être converties pour la création de la au moins une liaison (V19, V105, V613, V84, V32) dans le réseau de transmission (TN) par un système de gestion de réseau (NMS) côté exploitant du réseau en données d'instruction (INS), qui sont codées dans un format compréhensible pour les appareils du réseau (A1 à A13, K1 à K7, MUX) et
- des moyens de liaison (TR) pour la transmission des données de configuration (KON) au système de gestion de réseau (NMS), de sorte que le système de gestion de réseau (NMS) peut créer la au moins une liaison (V19, V105, V613, V84, V32) selon les données de configuration (KON) à l'aide des données d'instruction (INS).

16. Outil de configuration selon la revendication 15, avec des moyens (UIG) pour l'affichage d'une représentation graphique (TNI) du réseau de transmission (TN) à l'aide de données de planification (PD) au moyen d'appareils de réseau (A1 à A13, K1 à K7, MUX) du réseau de transmission (TN) et de moyens de liaison (1 à 17) entre ces appareils du réseau (A1 à A13, K1 à K7, MUX), par lesquels la au moins une liaison (V19, V105, V613, V84, V32) côté utilisateur peut être établie, la représentation (TNI) graphique contenant la visualisation d'au moins un critère de disponibilité des appareils du réseau (A1 à A13, K1 à K7, MUX) et/ou des voies de liaison (1 à 17).

17. Outil de configuration selon la revendication 15, avec lequel les moyens de production (KM, CHK, OP) sont conçus pour la production des données de configuration (KON) pour la au moins une liaison (V19, V105, V613, V84, V32) en tenant compte d'au moins un critère de configuration concernant des appareils de réseau (A1 à A13, K1 à K7, MUX) nécessaires pour la au moins une liaison (V19, V105, V613, V84, V32) et/ou des voies de liaison (1 à 17) du réseau de transmission (TN) et/ou pour le contrôle des entrées d'utilisateur (UIN) prévues pour la création de la au moins une liaison (V19, V105, V613, V84, V32) à l'aide du au moins un critère de configuration.
